**Europäisches Patentamt**

**European Patent Office**

**Office européen des brevets**

(19)

(11) Publication number: **0 378 363**
**A1**

## EUROPEAN PATENT APPLICATION

(12)

(21) Application number: **90300235.0**

(22) Date of filing: **09.01.90**

(51) Int. Cl.5: **H04N 17/02**

The title of the invention has been amended (Guidelines for Examination in the EPO, A-III, 7.3).

(30) Priority: **11.01.89 GB 8900575**

(43) Date of publication of application:
**18.07.90 Bulletin 90/29**

(84) Designated Contracting States:
**DE FR GB IT**

(71) Applicant: **ACER INCORPORATED**
**602 Min Sheng East Road**
**Taipei 10445(TW)**

(72) Inventor: **Hung, Chang Chi**
**602 Min Sheng East Road**
**Taipei(TW)**

(74) Representative: **Skone James, Robert Edmund et al**
**GILL JENNINGS & EVERY 53-64 Chancery Lane**
**London WC2A 1HN(GB)**

(54) Method of and system for testing the video output signal quality.

(57) A video signals testing method and system, in which video signals from a video connector (10) are input into a Cyclic Redundancy Check circuit (3) through a delay circuit (12). The CRC circuit (12) generates a fixed value corresponding to the specified testing full-frame. The generated value is inputted into the RAM of the unit under test (11) and compared with a preset built-in value to justify the correctness of the video signals without the aid of human naked eyes.

FIG. 1

EP 0 378 363 A1

## METHOD AND APPARATUS FOR MONITORING VIDEO SIGNALS

The invention relates to methods and apparatus for monitoring video signals.

It is essential for personal computers (PC) to pass the Burn-In test and Run-In test after the system is completed in order to assure its quality. Before the Burn-It test, the PC may be debugged using the automatic testing equipment (ATE), such as GENRED 2275, 2276, etc. After the Burn-In test is finished, the human interrupting functional tests are employed again to further ensure the product's reliability.

It is necessary to have diskette, monitor, and keyboard equipment when functional tests are undergone, to enable the testing software program to be input from the diskette into the Random Access Memory (RAM) of the unit under test (UUT) for execution, for keying the commands from the keyboard and for monitoring the testing process using the monitor.

Among many functional testings, the purpose of the video signals test is to debug various video signals of the UUT, including the vertical sync and horizontal sync signals.

At present, the engineer connects the video signals interface to the monitor and inspects the display of a predesigned full-frame with the naked eye to judge the quality and correctness of the video signals. The efficiency of this aforesaid method is low, and different engineers make different judgements because of different naked eyes and so the testing results will be inaccurate.

Methods are known for monitoring quality and colour of TV signals during a broadcast or recording. The quality can be corrected automatically in response to an alarm signal when an analogue measuring signal exceeds a preset value. The colour of a number of TV cameras filming at the same time may vary so this variation can be measured and a correction value arrived at, this new setting is tested by visual reference against a Macbeth colour detector chart. A method of fault location in digital systems in general is to use signature analysis which images a general bit sequence from the system under test onto a signature and can be carried out either in hardware or software as for example shown in an article from Radio Fernsehen Electronik - BERLIN 34 (1985) 1. "The use of signature analysis in microcomputer systems" by Dr. Ing. Gunterwill.

In accordance with one aspect of the present invention, apparatus for connection with the data bus of an expansion slot of a video signal generating unit under test for two-way data transmissions, the system receiving the IOR, IOW, AEN, and address signals therefrom, and video signals from a video connector of the unit under test, comprises tri-state buffer means connected with the data bus of the expansion slot of the unit under test for two-way data transmission under the control of ENABLE and DIRECTION signals, and for outputting the data signals;

control logic means for standardising the inputted the horizontal, and vertical sync signals and for outputting the standard horizontal, and vertical syncs, for receiving said data signals from said tri-state buffer, the address signals, IOR, IOW, AEN and address signals from the expansion slot of the said unit under test, for outputting ENABLE and DIRECTION signals to said tri-state buffer and for outputting start-up and read-out signals;

a clock signal generator for outputting clock signals corresponding to the testing video signals;

a Frame Beginning-End circuit for detecting completely the video signals of testing full-frame without the missing ones, receiving the standard horizontal and vertical syncs signals, start-up signal and read-out signals from the control logic means and the video signals, outputting the detection signal to the tri-state buffer and outputting the clock enable signal;

a clock synchronisation circuit for generating a sync clock which is synchronous in frequency and phase with the video signals of the unit under test, the circuit receiving the clock signals from the clock signal generator and said clock enable signal from said Frame Beginning-End circuit to generate the sync clock;

a delay circuit which receives the video signals and outputs the video signals after being delayed for a specific amount of time;

a Cyclic Redundancy Check circuit which receives the start-up signal from the logic control means, video signals from the delay circuit and sync clock from the clock synchronisation circuit with the video signals and sync clock entering the Cyclic Redundancy Check circuit substantially at the same time causing one sync clock to sample one video signal, whereby a fixed value corresponding to the testing full-frame can be outputted from this circuit to the tri-state buffer under the control of the read-out signals.

In accordance with a second aspect of the present invention, apparatus for monitoring the status of video signals comprises auxiliary clock signal generating means for generating a clock signal which is substantially synchronised in frequency and phase with the clock signal associated with the video signal being monitored; sampling means responsive to the auxiliary clock signal and to which the video signal is fed for regularly sampling the video signal at times determined by the auxiliary clock signal in order to generate a value from the samples; and comparison means for comparing the value with a predetermined reference value; the auxiliary clock signal generating means comprising means for generating a number of clock signals with different frequencies, a frequency selection multiplexer to which all clock signals are fed, the multiplexer being responsive to control signals to select one of the input clock signals, and a clock synchronization circuit to which the selected one of the clock signals is fed, the synchronization circuit being adapted to adjust the phase of the selected clock signal so that it is synchronized with the clock signal of the video signal being monitored.

Preferably, the apparatus further comprises a video signal selection multiplexer to which all the video signals are fed and which is operable to pass a selected one of the video signals. A frame detection circuit may be provided to which the video signal being monitored is fed, the detection circuit being adapted to detect the beginning and end of a frame and to control the sampling means to sample a video signal between the beginning and end of the frame. The frame detection circuit may be adapted to sense vertical synchronization signals associated with the video signal being monitored.

In accordance with a third aspect of the present invention a method for testing video frames comprises supplying a start-up signal to a cyclic redundancy check circuit to initialize it; using the cyclic redundancy check circuit to input the video signals of the frame to be tested and the sync clocks substantially at the same time causing one sync clock to sample one video signal and generating a fixed value corresponding to the video signals from the beginning to the end of the said frame; and comparing thee fixed value with a stored value.

Preferably an auxiliary clock signal is generated which is substantially synchronised in frequency and phase with the clock signal associated with the video signal being monitored. Typically this step comprises generating a number of clock signals with different frequencies, selecting one of the clock signals, and adjusting the phase of the selected clock signal to coincide with the phase of the clock signal associated with the video signal being monitored. The step of regularly sampling the video signal at times determined by the auxiliary clock signal typically comprises detecting the beginning of a frame, monitoring for the end of a frame, and sampling the video signal from the time at which the beginning of the frame was detected to the time at which the end of the frame is determined.

This invention is aimed to solve the defects of the aforesaid method and to provide a video signals testing system and method thereof through which the result of the testing is compared with predetermined reference values without the inaccurate naked eye judgement.

In the preferred example, like other functional testings, the testing software of the invention may be stored in the diskette or in the Erasable Programmable Read Only Memory (EPROM) in an expansion card of the UUT. After reset of the UUT, the testing software is transferred into the RAM of the UUT for execution, and the video signals are inputted into the system from the video interface through the video connector.

The standard reference values corresponding to the respective testing full-frames are saved in the testing software for comparison. Those values are obtained by running the error-free UUT several times without the comparison steps, and then registering the resulting samples values in the built-in reference table of the testing software for future comparison purposes.

In the preferred example a tri-state buffer is connected with the data bus of the expansion slot of the UUT for two-way communication; other signals like IOR, IOW, AEN, A0-A1, A6-A9, are inputted into the control logic means, the control logic means also inputs the data signals from said tri-state buffer and the horizontal sync $Hs'$, vertical sync $Vs'$ from the video signals connector of the UUT.

The testing software transfers the initial status signals, such as the phases of the horizontal and vertical syncs, the system frequency selected, and read/write control signals to the control logic means through the IOR, IOW, AEN, A1-A2, A6-A9, and data bus lines of the expansion slot of the UUT, enabling the control logic means to output the video select signal to video select multiplexer means, and to output the frequency select signal to the frequency select multiplexer means and the clock synchronization circuit, and to output the start-up LOW level signal to the Cyclic Redundancy Check(CRC) circuit, and to output the standardized horizontal Hs, vertical Vs sync signals and start-up signal to the Frame Beginning-End(FBE) circuit, and to output the A→B directional, EN active signals to tri-state buffer.

After the start-up LOW level signal in the first place causes the CRC circuit to revert to its initial state, the start-up signal becomes HIGH and remains HIGH. The start-up HIGH level signal enables the FBE circuit, and after the first vertical and horizontal sync signals Vs, Hs appear at the same time, the FBE circuit outputs a detection HIGH signal to the tri-state buffer when the first horizontal sync Hs goes from HIGH to LOW in order to notify the control logic means the FBE circuit is beginning the video detections.

When the first R, G, B, $R'$, $G'$ or $B'$ video signal has entered the FBE circuit, the FBE circuit outputs a clock enable HIGH signal to clock synchronization circuit, causing the clock synchronization circuit to output a sync clock to the FBE and CRC circuits which is synchronous in frequency and phase with the video signals from UUT.

The R, G, B, R$'$, G$'$, or B$'$ video signals are also inputted into a delay circuit and therefrom clocked into the CRC circuit by the sync clock; therefore, one sync clock samples one video signal into the CRC circuit.

As long as the horizontal sync signal Hs remains LOW, the sync clocks are outputted steadily to the CRC circuit to read the video signals. Only after the horizontal sync signal Hs becomes HIGH again (N = 2,3,......), the FBE circuit outputs the clock enable LOW signal to the clock synchronization circuit after the sync clock has been sent out for 16N + 2 (N = 1,2,....) times, causing the clock synchronization circuit stop outputting the sync clock to cease the video signals detection. After the period of non-detection, and after the horizontal sync signal Hs becomes LOW (N = 2,3,....), the FBE circuit· outputs the clock enable HIGH signal to clock synchronization circuit again when the video signals come into the FBE circuit anew, causing the FBE circuit to output the sync clock and CRC circuit to read the video signals once again. That is to say, whenever the pulse of horizontal sync Hs appears once, the sync clock will be stopped after it has been sent out 16N + 2 (N = 1,2,....) times; after stopped for a while, the sync clock will be outputted once again to the CRC circuit to read the video signals when the video signals come into the FBE circuit again. In this way, the CRC circuit can be driven by the steady sync clocks and have a fixed output value when the same video signals are inputted into the system. After the R signals are completely detected, the procedure repeats for G signals, B signals, R$'$ signals, C$'$ signals, and then B$'$ signals. As the R signals of a specified testing full-frame are entirely inputted, the vertical sync signal Vs definitely appears HIGH (N = 2,3,....), and the FBE circuit outputs the detection LOW signal to let the control logic means know the R signals of one full-frame are inputted conpletely. For signals like G signals,......, B$'$ signals, etc, the above descriptions also apply. Receiving the detection LOW signal, the control logic means outputs the read-out signals to the CRC circuit to input respectively the higher bytes, lower bytes of 16 bits output of CRC circuit to tri-state buffer, and thereby the output of CRC circuit are inputted into the data bus of the expansion slot, and then the RAM of the UUT for comparison with the reference value of the testing software. If it meets the criterion, the video signals of corresponding full-frame are considered error-free, and the control logic means outputs the start-up LOW signal to the CRC circuit to revert to its initial status. If it does not meet the criterion, representing the video signals have errors, the error code will be outputted and the video signals testing stops at this point.

## BRIEF DESCRIPTION OF THE DRAWINGS

Figure 1 is main block diagram of an example of this invention;

Figure 2 is a detailed diagram of the Frame Beginning-End(FBE) circuit; and,

Figure 3 is a detailed diagram of the clock synchronization circuit.

Like other functional testings, the testing software of this invention may be stored in a diskette or in an Erasable Programmable Read Only Memory(EPROM) in an expansion card of UUT 11. After reset of UUT 11, the testing software is transferred into the RAM of UUT 11 for execution, and the video signals are inputted into the system from the video interface through the video connector 10.

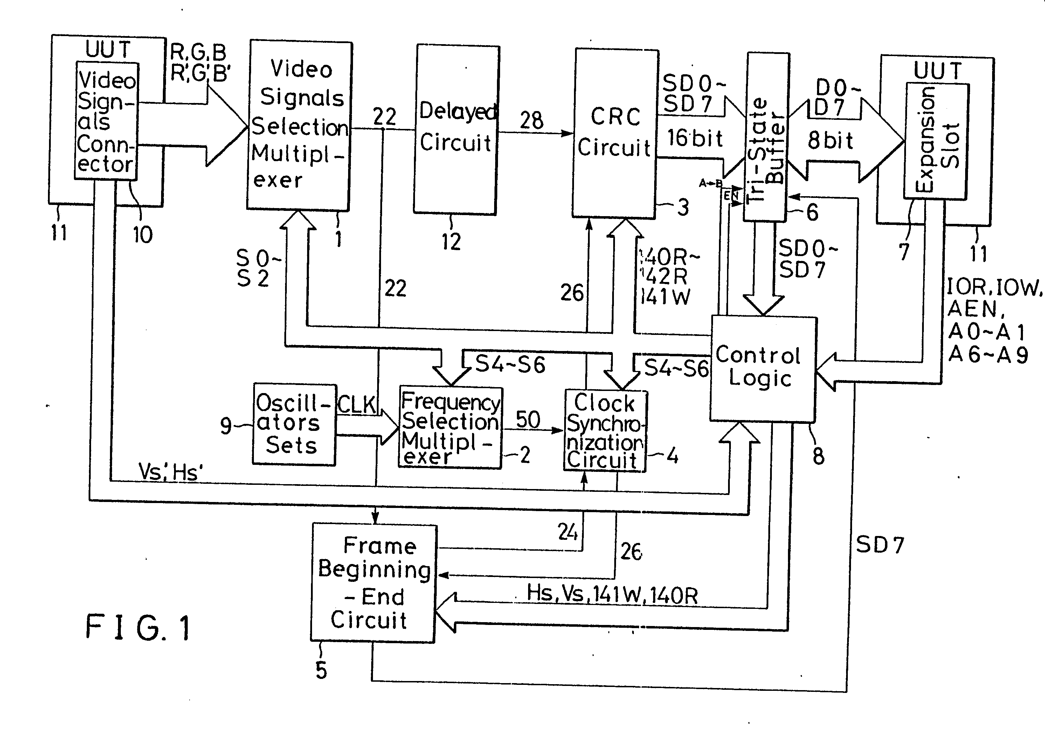

Referring to the FIG. 1, the system comprises a video signals selection multiplexer 1 for inputting the video signals outputted from the video signals connector 10 on the unit under test(UUT) 11, such as R, G, B, or R$'$, G$'$, B$'$ signals, and outputting the serial video signals 22 to the delay circuit 12 and Frame Beginning-End(FBE) circuit 5. Through the video signals connector 10, the horizontal, vertical sync signals Hs$'$, Vs$'$ of the video signals are inputted into the control logic means 8.

The system has a tri-state buffer 6 connecting with the data bus D0-D7 of the expansion slot 7 for two-way transmissions; the initial instructions of the testing software can be inputted into the buffer 6 and then the control logic means 8 through the SD0-SD7 data lines, including the selection signals s0-s2 for selecting one of the R, G, B, R$'$, G$'$, B$'$ signals to enter this invention and the phase status of the entering horizontal sync Hs, vertical sync Vs. The address signals and the read/write control signals IOR, IOW on the expansion slot 7 are also inputted into the control logic means 8.

Inputting the write control IOW signal and other initial signals, the control logic means 8 outputs the s0-s2 video select signals to video selection multiplexer 1 for selecting one of the R,G,B,R$'$,G$'$,or B$'$ signals to enter the delay circuit 12 and the FBE circuit 5, and outputs the s4-s6 frequency selection signals to the frequency selection multiplexer 2 for inputting one of the clocks from the oscillators sets 9. The control logic means 8 also outputs the s4-s6 frequency selection signals to the clock synchronization circuit 4 causing it to output a sync clock 26 which is synchronous in frequency and phase with the video signals from the UUT 11, and outputs start-up 141w LOW signal to the CRC circuit 3 to revert to its initial state. After the reset action is completed, the 141w signal becomes HIGH and remains HIGH till next signal cycle. The 141w signal is also inputted into the FBE circuit 5 to enable it.

The control logic means 8 standardizes the inputted horizontal, vertical sync signals Hs', Vs', and outputs the standardized HIGH Vs, Hs signals to the FBE circuit 5.

The control logic means 8 outputs 141w HIGH signal to enable the FBE circuit 5; and after the first vertical and horizontal sync signals Vs, Hs appear at the same time, the FBE circuit 5 outputs the detection SD7 HIGH signal to tri-state buffer 6 when the 1st horizontal sync Hs becomes LOW, under the control of the 140R signal sent by the control logic means 8, causing the SD7 signal to enter control logic means 8 notifying thereto the video signals detection are begun by the FBE circuit 5.

When the first R video signal 22 has entered the FBE circuit 5, the FBE circuit 5 outputs a clock enable HIGH signal 24 to clock synchronization circuit 4, and uses the clock signal 50, inputted from the frequency selection multiplexer 2, as the input the Programmable Logic Array (PLA) of the clock synchronization circuit 4 will determine which delayed clock is synchronous in phase with the video signals of the UUT 11 and output the sync clock 26 to the FBE circuit 5 and CRC circuit 3.

The video signal 28, being the output of the delay circuit 12, enters the CRC circuit 3 at the same time as that sync clock 26 enters the CRC circuit 3. In this way, one sync clock 26 can sample one video signal.

The purpose of the FBE circuit 5 is to detect the full-frame video from the first video signal to the last video signal without any missing signals.

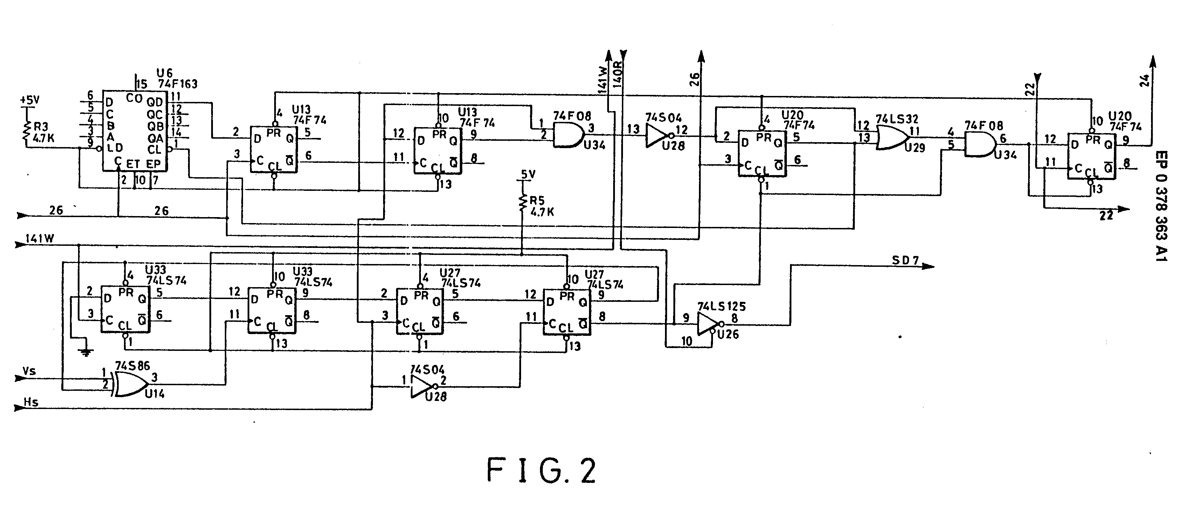

Referring to FIG. 2, as the software instruction causes the 141w to change from initiative LOW level to HIGH level, the chip U33 pin 5 becomes LOW; and as the vertical sync signal Vs changes from LOW to HIGH level, the U33 pin 9 becomes LOW; at the same time , the horizontal sync signal Hs changes from LOW to HIGH level also, so the U27 pin 5 becomes LOW; as the horizontal sync signal Hs changes from HIGH to LOW level, the U27 pin 8 becomes HIGH causing the U34 pin 6 to output HIGH.

As the first R video signal 22 enters CLOCK pin of the U20, the U20 pin 11 receives a pulse causing the U20 pin 9 to output a clock enable HIGH signal 24 to clock synchronization circuit 4. Using the clock enable HIGH signal 24 as the input, the sync clock 26 synchronous in frequency and phase with the video signals of UUT 11 then is generated.

The FBE circuit 5 has a divide-by-16 chip U6; after 16N (N=1,2,...) of sync clocks 26 have been generated, the U6 pin 11 finishes a cycle, and as the 16N+1 th (N=1,2,....) sync clock 26 enters the U6, the U13 pin 6 becomes HIGH triggering the U13 pin 11 to become HIGH, and if the horizontal sync signal Hs remains LOW at this moment, the U13 pin 9 outputs LOW; so the U34 pin 3 outputs LOW and U28 pin 12 outputs HIGH. As the 16N+2 th (N=1,2,....) sync clock 26 appears, U20 pin 5 is HIGH, and it will not change the status of its downstream elements; that is to say, as long as the horizontal sync signal Hs remains LOW, the clock enable signal 24 remains HIGH causing the clock synchronization circuit 4 to output the sync clocks 26 to CRC circuit 3 for the video signals reading.

When the horizontal sync signal Hs becomes HIGH once again (N=2,3, .....), the U13 pin 12 becomes HIGH; after the U6 has processed the 16N+1 th(N=1,2,....) clock, the U13 pin 9 outputs HIGH, and the U28 pin 12 outputs LOW; and after the U6 has processed the 16N+2 th(N=1,2,....) clock, the U20 pin 5 outputs LOW, U29 pin 11 outputs LOW, U34 pin 6 outputs LOW, U20 pin 12 receives LOW signal; that is, a CLEAR enable signal to the pin 12 of U20, so the U20 pin 9 outputs clock enable LOW signal 24 to clock synchronization circuit 4 causing it to stop outputting the sync clock 26 and thereby cease reading the video signals 28. And after the horizontal sync signal Hs becomes LOW (N=2,3,....), the FBE circuit 5 outputs the clock enable HIGH signal 24 again to clock synchronization circuit 4 when the video signals 22 come into the FBE circuit 5 anew, causing the FBE circuit 5 to output the sync clock 26 and CRC circuit 3 to read the video signals 28 once again. That is to say, whenever the pulse of horizontal sync Hs appears once(N=2,3,......), the sync clock 26 will be stopped after it has been sent out 16N+2 times; after stopped for a while, the sync clock 26 will be outputted once again to the CRC circuit 3 to read the video signals 28 when the video signals 22 comes into the FBE circuit 5 again. BY this way, the CRC circuit 3 can be driven by the steady sync clocks 26 and have a fixed output value when the same video signals 22 are inputted into this invention.

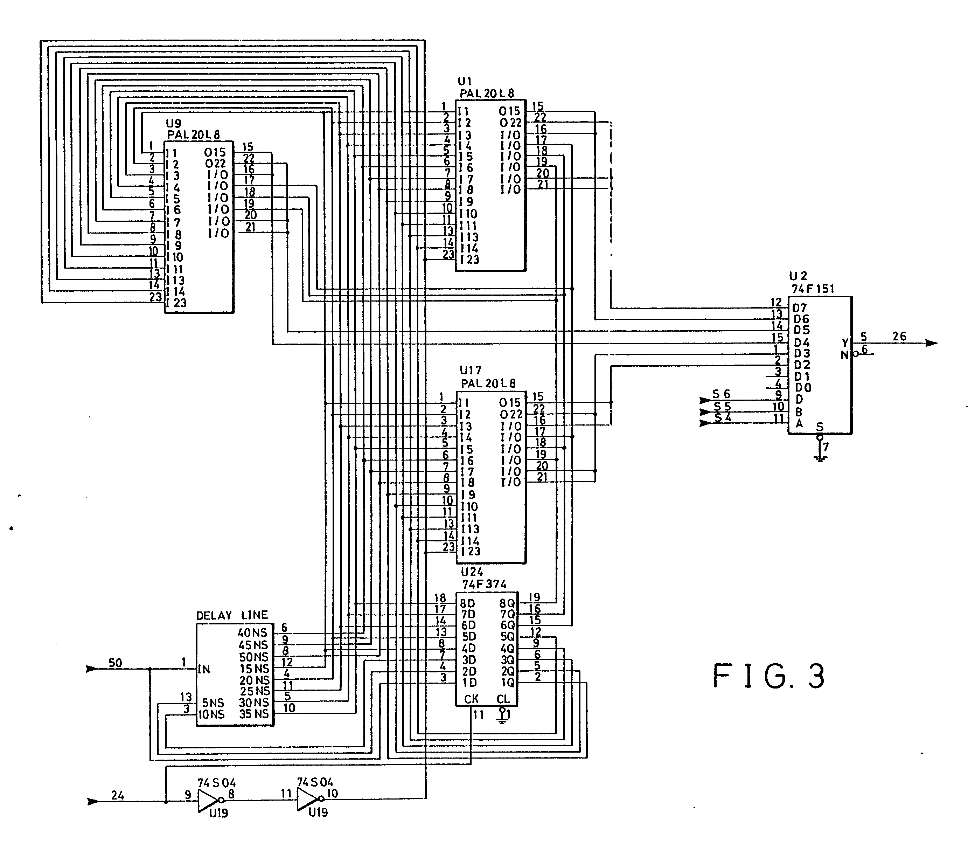

Referring to the FIG. 3, after the clock enable signal 24 enters the clock synchronization circuit 4, being delayed for about 10 ns by two buffers U19, the clock enable signal 24 enters the pin 23 of three PLA chips acting as chip enable signal; meanwhile, the clock enable signal 24 enters the U24 as latch enable signal before being delayed.

As the clock 50, which has the same frequency as the video signals of the UUT, enters the clock synchronization circuit 4 from the frequency selection multiplexer 2, it is delayed respectively 0ns, 5ns, 10ns, 15ns, 20ns, 25ns, 30ns, 35ns respectively by the delay-line chip and therefrom outputted to the latch U24, and on the threshold of appearing of the clock enable HIGH signal 24, the latch U24 latches each phase-delayed clocks. The PALs determine which delayed clock is synchronous in phase with that of the video signals, depending on the latched phase status, and output the same to the multiplexer U2 and then output the sync clock 26 under the control of the frequency selection signals s4-s6. There are three PLAs in the FIG.3 because many kinds of oscillators are used in the video signals generating and different oscillator must has its own PLA equation.

After the R signals are completely detected, the procedure goes for G signals, B signals, R′ signals, G′ signals, then B′ signals. As the R signals of a specified testing full-frame are entirely inputted, the vertical sync signal Vs definitely appears HIGH (N = 2,3,....), and the· FBE circuit 5 outputs the detection SD7 LOW signal to let the control logic means 8 know the R signals of one full-frame are inputted completely. For signals like G signals,......,B′ signals, etc, the above descriptions also apply. Referring back to the FIG. 1, after receiving the SD7 LOW signal, the control logic means 8 outputs the read-out 141R, 142R enable signals to the CRC circuit 3 to input respectively the higher bytes, lower bytes of 16 bits output of CRC circuit 3 to tri-state buffer 6, and thereby the output of CRC circuit 3 are inputted into the data bus D0-D7 of the expansion slot, and then the RAM of the UUT for comparison with the reference value of the testing software. If it meets the criterion, the video signals 22 of corresponding full-frame are considered error-free, and the control logic means 8 outputs the start-up 141w LOW signal to the CRC circuit 3 to revert to its initial status. If it does not meet the criterion, representing the video signals 22 have errors, the error code will be outputted and the video signals testing stops at this point.

It should be noted that in this embodiment a 17 bits CRC circuit is used. One of 17 bits output of CRC circuit 3 is discarded and the left 16 bits output are received respectively using the read-out 141R, 142R signals. And it is known different bits of CRC circuit can also be used.

After video signals of one testing full-frame are tested free of error, then the testing software outputs next scheduled testing full-frame to video connector 10 and then sends out the initiative status of this new testing full-frame signals to control logic means 8 through data bus D0-D7 and the tri-state buffer 6. And the aforesaid procedures apply also to this new testing full-frame. From one full-frame to another, if each full-frame signals are error-free, until the entire pre-scheduled testings are completed. The testing will be stopped if errors of one full-frame video signals encountered.

## Claims

1. Apparatus for connection with the data bus of an expansion slot (7) of a video signal generating unit under test (11) for two-way data transmissions, the system receiving the IOR, IOW, AEN, and address signals therefrom, and video signals from a video connector (10) of the unit under test (11), the system comprising

tri-state buffer means (6) connected with the data bus of the expansion slot (7) of the unit under test for two-way data transmission under the control of ENABLE and DIRECTION signals, and for outputting the data signals;

control logic means (8) for standardising the inputted, the horizontal, and the vertical sync signals and for outputting the standard horizontal, and vertical syncs, for receiving said data signals from said tri-state buffer (6), the address signals, IOR, IOW, AEN and address signals from the expansion slot (7) of the said unit under test (11), for outputting ENABLE and DIRECTION signals to said tri-state buffer (6) and for outputting start-up and read-out signals;

a clock signal generator for outputting clock signals corresponding to the testing video signals;

a Frame Beginning-End circuit (5) for detecting completely the video signals of testing full-frame without the missing ones, receiving the standard horizontal and vertical syncs signals, start-up signal and read-out signals from the control logic means (8) and the video signals, outputting the detection signal to the tri-state buffer (6) and outputting the clock enable signal;

a clock synchronisation circuit (4) for generating a sync clock which is synchronous in frequency and phase with the video signals of the unit under test (11), the circuit receiving the clock signals from the clock signal generator and said clock enable signal (24) from said Frame Beginning-End circuit (5) to generate the sync clock (26);

a delay circuit which receives the video signals and outputs the video signals after being delayed for a specific amount of time;

a Cyclic Redundancy Check circuit (3) which receives the start-up signal from the logic control means (8), video signals from the delay circuit and sync clock (26) from the clock synchronisation circuit (4) with the video signals and sync clock (26) entering the Cyclic Redundancy Check circuit (3) substantially at the same time causing one sync clock to sample one video signal, whereby a fixed value corresponding to the testing full-frame can be outputted from this circuit to the tri-state buffer (6) under the control of the read-out signals.

2. Apparatus according to claim 1, further comprising video signals selection multiplexer (1) means which receives the video signals input to the system and which outputs to the delay circuit (12) and the Frame Beginning-End circuit (5) the specified video signals under the control of a video selection signal generated by the control logic means (8).

3. Apparatus according to claim 1 or claim 2, wherein the clock signal generator comprises oscillator sets (9) which generate a plurality of clock signals corresponding to the different testing frequencies, and frequency selection multiplexer (2) means which receives the clock signals from the oscillator sets (9) and which outputs the specified clock signal under the control of a frequency selection signal from the control logic means (8).

4. Apparatus for monitoring the status of video signals, the apparatus comprising auxiliary clock signal generating means for generating a clock signal (26) which is substantially synchronized in frequency and phase with the clock signal associated with the video signal being monitored; sampling means responsive to the auxiliary clock signal and to which the video signal is fed for regularly sampling the video signal at times determined by the auxiliary clock signal in order to generate a value from the samples; and comparison means for comparing the value with a predetermined reference value; the auxiliary clock signal generating means comprising means for generating a number of clock signals with different frequencies, a frequency selection multiplexer (2) to which all the clock signals are fed, the multiplexer (2) being responsive to control signals to select one of the input clock signals, and a clock synchronization circuit (4) to which the selected one of the clock signals is fed, the synchronization circuit (4) being adapted to adjust the phase of the selected clock signal so that it is synchronized with the clock signal of the video signal being monitored.

5. Apparatus according to claim 4, for monitoring the status of a number of different types of video signal, the apparatus further comprising a video signal selection multiplexer to which all the video signals are fed and which is operable to pass a selected one of the video signals.

6. Apparatus according to claim 5 or claim 6 further comprising a frame detection circuit (5) to which the video signal being monitored is fed, the detection circuit being adapted to detect the beginning and end of a frame and to control the sampling means to sample a video signal between the beginning and end of a frame.

7. Apparatus according to claim 6 or claim 7 wherein the frame detection circuit (5) is adapted to sense vertical synchronization signals associated with the video signal being monitored.

8. A method for testing video frames comprising:
supplying a start-up signal to a cyclic redundancy check circuit (3) to initialize it; using the cyclic redundancy check circuit (3) to input the video signals of the frame to be tested and the sync clocks (26) substantially at the same time causing one sync clock to sample one video signal and generating a fixed value corresponding to the video signals from the beginning to the end of the said frame; and comparing the fixed value with a stored value.

9. A method according to claim 8 wherein;
a. an auxiliary clock signal is generated which is substantially synchronised in frequency and phase with the clock signal associated with the video signal being monitored; and
b. the video signal is regularly sampled at times determined by the auxiliary clock signal.

10. A method according to claim 9 wherein a signal to be monitored is selected, and then steps a) and b) are performed on the selected video signal.

11. A method according to claim 9 or claim 10, wherein step a) comprises generating a number of clock signals with different frequencies, selecting one of the clock signals, and adjusting the phase of the selected clock signal to coincide with the phase of the clock signal associated with the video signal being monitored.

12. A method according to any of claims 9 to 11, wherein step b) comprises detecting the beginning of a frame, monitoring for the end of a frame, and sampling the video signal from the time at which the beginning of the frame was detected to the time at which the end of the frame is determined.

FIG. 1

FIG.2

FIG. 3

EP 0 378 363 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | RADIO FERNSEHEN ELEKTRONIK, vol. 34, no. 1, 1985, pages 22-25,54; G. WILL: "Anwendung der Signaturanalyse in Mikrorechnersystemen" * Page 22, left-hand column, lines 1-8; page 22, right-hand column, lines 17-20; page 23, left-hand column, line 35 - page 23, right-hand column, line 2; page 24, right-hand column, line 50 - page 54, right-hand column, line 16 * | 1 | H 04 N 17/02 |
| A | IDEM | 3,4,8,9 ,11,12 | |
| A | WIRELESS WORLD, vol. 81, no. 1469, January 1975, pages 37-42; J. SCHAFFER: "Computer monitoring of TV signals" * Page 38, central column, lines 23-43; figure 2 * | 1,4,8,9 | |
| A | INTERNATIONAL BROADCASTING CONVENTION, Brighton, 21st-25th September 1984, pages 395-399; C.J. DALTON et al.: "Measuring the fidelity of camera colour reproduction in operational conditions" * Page 395, paragraph "Introduction"; page 395, paragraph "Real sample sequencer/illuminator equipment"; page 396, paragraph "Measurement of camera outputs"; page 396, paragraph "Processing of results" *  -/- | 1,2,4,5 ,8,9,10 | TECHNICAL FIELDS SEARCHED (Int. Cl.5) H 04 N 17 |

The present search report has been drawn up for all claims

| Place of search | Date of completion of the search | Examiner |
|---|---|---|
| THE HAGUE | 13-03-1990 | DUHR R.H.J.E. |

European Patent Office

**EUROPEAN SEARCH REPORT**

Application Number

EP 90 30 0235

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | TECHNISCHE MITTEILUNGEN DES RFZ, vol. 29, no. 4, Dezember 1985, pages 77-79, Berlin. DE; M. KÜHN: "Die Anwendung der Signaturanalyse in digitalen Fernseheinrichtungen" * Page 77, left-hand column, line 13 - right-hand column, line 22; page 79, paragraph 4 "Anwendung der Signaturanalyse" * | 1,4,8,9 | |
| A | DE-A-3 601 605 (WANDEL & GOLTERMANN GmbH) * Abstract; column 1, line 33 - column 2, line 4 * | 4,9,12 | |

TECHNICAL FIELDS SEARCHED (Int. Cl.5)

The present search report has been drawn up for all claims

| Place of search | Date of completion of the search | Examiner |
|---|---|---|
| THE HAGUE | 13-03-1990 | DUHR R.H.J.E. |